Europäisches Patentamt

European Patent Office

Office européen des brevets

(19)

(11) EP 0 884 102 A1

(12) DEMANDE DE BREVET EUROPEEN

(43) Date de publication:
16.12.1998 Bulletin 1998/51

(51) Int Cl.⁶: B01J 23/652, C10G 45/40

(21) Numéro de dépôt: 98401226.0

(22) Date de dépôt: 20.05.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 09.06.1997 FR 9707213

(71) Demandeur: INSTITUT FRANCAIS DU PETROLE
92500 Rueil Malmaison (FR)

(72) Inventeurs:
• Didillon, Blaise
92500 Rueil Malmaison (FR)
• Uzio, Denis
78160 Marly Le Roi (FR)
• Cameron, Charles
75005 Paris (FR)
• Gautreau, Christophe
78360 Montesson (FR)

(74) Mandataire: Andreeff, François
Département Brevets,
Institut Français du Petrole,
1 & 4 avenue de Bois-Préau
92852 Rueil Malmaison (FR)

(54) **Catalyseur pour le traitement de coupes essences contenant des dioléfines, des composés styréniques et éventuellement des mercaptans**

(57) On décrit un catalyseur permettant d'hydrogéner sélectivement les composés insaturés dioléfiniques et styréniques dans les essences, sans hydrogéner les composés aromatiques et monooléfiniques. Il permet également d'éliminer les mercaptans lorsqu'ils sont présents dans ces essences. Ce catalyseur comprend un support particulier sur lequel sont déposés du palladium, réparti à la périphérie des particules de catalyseur, et au moins un métal choisi parmi le molybdène et le tungstène, sous la forme d'au moins un oxyde.

## Description

La présente invention concerne un catalyseur permettant d'hydrogéner sélectivement les composés dioléfiniques et styréniques dans les essences insaturées, sans hydrogéner les composés aromatiques et monooléfiniques et permettant également d'éliminer les mercaptans lorsqu'ils sont présents ces essences.

On sait que les essences de vapocraquage contiennent des composés précurseurs de gommes, tels que des dioléfines, ainsi que des composés styréniques (tels que le styrène lui-même), en mélange avec des composés monooléfiniques et des composés aromatiques. La valorisation des composés monooléfiniques passe par une hydrogénation sélective des dioléfines et des composés styréniques.

Le craquage d'hydrocarbures pour la production d'oléfines produit une fraction liquide dont une partie des composés a un point d'ébullition correspondant aux coupes essences traditionnelles. Ce mélange présente des teneurs en composés aromatiques et monooléfiniques élevées, qui lui confèrent de bonnes propriétés en tant que carburant et qui lui permettent d'être valorisé, soit dans le « pool essence », soit comme source de composés aromatiques. Cependant, ces essences de craquage contiennent de fortes teneurs en composés fortement réactifs, tels que les dioléfines, qui sont des composés précurseurs de gommes, et les composés styréniques (en particulier le styrène). Ces essences sont donc instables, ce qui nécessite la mise en oeuvre d'un procédé d'hydrogénation avant leur utilisation. De plus, selon le procédé de conversion, les essences peuvent contenir des quantités non négligeables de mercaptans, qu'il faut éliminer afin d'obtenir des essences « adoucies ». négatives au « Doctor Test ».

Pour l'hydrogénation des dioléfines et des composés styréniques, deux grands types de catalyseurs sont généralement utilisés : les catalyseurs utilisant les métaux nobles du groupe VIII, tels que par exemple le palladium, et ceux utilisant les métaux non nobles du groupe VIII tels que par exemple le nickel. (Dans la présente descnption, la Classification Périodique des Eléments considérée est celle du Chemical Abstracts Service (CAS)). Cependant, ce second type de catalyseurs présente généralement une activité plus faible et des propriétés oligomérisantes, qui nécessitent leur régénération fréquente et l'utilisation d'une colonne de distillation après l'hydrogénation pour éliminer les composés lourds. Un exemple d'utilisation de ce type de catalyseur est donné dans le brevet US-A-3 691 066. Les catalyseurs à base de métaux nobles sont généralement plus actifs que les catalyseurs à base de métaux non nobles.

En ce qui concerne l'élimination des mercaptans, les catalyseurs utilisant les métaux non nobles du groupe VIII, tels que par exemple le nickel, permettent la transformation des mercaptans sous forme de sulfures. Cependant, ce type de catalyseurs présente généralement des propriétés oligomérisantes, qui nécessitent leur régénération fréquente et l'utilisation d'une colonne de distillation après l'hydrogénation pour éliminer les composés lourds. D'autre part, ces catalyseurs ne peuvent traiter des charges à fortes teneurs en mercaptans telles qu'on peut en trouver parmi les essences de craquage catalytique.

Par ailleurs, si les catalyseurs à base de métaux nobles du groupe VIII sont généralement plus actifs que les catalyseurs à base de métaux non nobles dans l'hydrogénation des composés dioléfiniques et des composés styréniques, ils ne permettent pas toujours la transformation des mercaptans. Leur utilisation nécessite donc d'adoucir l'essence hydrogénée par exemple par un procédé tel que ceux décrits dans les demandes de brevets français 2 753 717 et 2 753 718, au nom du même déposant.

On peut également noter que l'utilisation de systèmes métal du groupe VIII - métal du groupe VIB a déjà été mentionnée dans la littérature, par exemple par M. Yamada J. Yasumaru, M. Houalla, D. Hercules in : « Distribution of Molybdenum Oxidation States in Reduced Mo/Al$_2$O$_3$ Catalysts. Correlation with Benzene Hydrogenation Activity. ». J. Phys. Chem., *95,* 7037-7042 (1991) ou par A. Jimenez-Gonzalez, D. Schmeisser in : « Electron Spectroscopic Studies of Mo and Pt Modified γ-Al$_2$O$_3$ Model Catalyst. », J. Catal. *130,* 332-346 (1991). Mais, dans ces documents, il s'agissait de réactions d'hydrogénation totale.

Un premier objet de la présente invention est de fournir un nouveau catalyseur capable de réaliser avec des performances améliorées l'hydrogénation sélective des dioléfines et des composés styréniques dans une coupe essence insaturée. Dans ce cas, le catalyseur de l'invention présente l'avantage de permettre d'atteindre des conversions des dioléfines et des composés styréniques supérieures à celles atteintes avec un catalyseur au palladium seul. Les performances catalytiques de ce catalyseur sont également plus stables au cours du temps que celles d'un système monométallique.

Un autre objet de la présente invention est de fournir un nouveau catalyseur dont la mise en oeuvre permet, pour une coupe d'essence insaturée contenant des dioléfines, des composés styréniques ainsi que des mercaptans, de réaliser en une seule opération, d'une part, l'hydrogénation des dioléfines et des composés styréniques et, d'autre part, la transformation des mercaptans.

Le catalyseur selon l'invention est défini comme comprenant un support particulaire constitué de grains d'au moins un oxyde réfractaire, sur lequel sont déposés du palladium, réparti à la périphérie des grains dudit support, et au moins un métal choisi parmi le molybdène et le tungstène, sous la forme d'au moins un oxyde.

Plus particulièrement, les grains de support sont par exemple sous la forme de billes ou de cylindres (par exemple extrudés cylindriques) ; le palladium peut alors être réparti dans une couche périphérique desdits grains avec une pénétration à une profondeur ne dépassant pas par exemple 80 % du rayon desdites billes ou desdits cylindres.

Dans le catalyseur selon l'invention, la teneur en palladium est en général comprise entre 0,2 et 5 % en masse et la teneur en molybdène et/ou tungstène entre 0,5 et 5 % en masse.

Le support est généralement choisi parmi les oxydes réfractaires, tels que par exemple l'alumine, la silice, les silices-alumines, la magnésie ou leurs mélanges entre eux. Le support préféré est une alumine, plus particulièrement une alumine de surface spécifique comprise entre 5 et 200 m$^2$/g, de préférence de 10 à 110 m$^2$/g et encore plus avantageusement de 20 à 80 m$^2$/g. Le volume poreux du support d'oxyde réfractaire peut être par exemple de 0.4 à 1 cm$^3$/g.

En ce qui concerne la préparation des catalyseurs de l'invention, l'élément du groupe VIII et l'élément du groupe VIB peuvent être introduits selon les techniques connues par l'homme du métier. Par exemple si le métal du groupe VIII est le palladium, il peut être introduit par des techniques d'imprégnation de solution aqueuse ou organique d'un précurseur de palladium. Ce précurseur peut par exemple être un composé minéral, tel que par exemple le chlorure de palladium, le nitrate de palladium, ou un composé organométallique, tel que par exemple le palladium bis π-allyle ou le bis-acétylacétonate de palladium. Le tungstène, à titre d'exemple d'élément du groupe VIB, peut être introduit par imprégnation du support par une solution aqueuse ou organique d'un précurseur du tungstène, tel que par exemple le métatungstate d'ammonium, le paratungstate d'ammonium, le chlorure de tungstène ou les composés carbonylés du tungstène. Le molybdène peut être introduit par imprégnation du support au moyen d'une solution aqueuse ou organique d'un précurseur du molybdène, tel que par exemple l'heptamolybdate d'ammonium.

Les éléments peuvent être introduits à l'aide de solutions communes ou de solutions séparées. De préférence, les deux éléments sont introduits de façon séparée et avantageusement le composé renfermant l'élément du groupe VIB est introduit avant le composé renfermant l'élément du groupe VIII.

Après introduction des différents éléments, le catalyseur est généralement séché à une température de 90 à 150°C, par exemple à environ 120 °C, puis calciné à des températures allant généralement de 150 à 700 °C.

Lorsque l'on introduit les éléments catalytiques en plusieurs étapes d'imprégnation, le catalyseur peut, entre deux étapes d'imprégnation, subir différents traitements, tels que par exemple un séchage à une température de 90 à 150 °C, par exemple à environ 120 °C et une calcination sous air à une température de 400 à 500 °C, par exemple à environ 450 °C.

Pour que le métal ou les métaux du groupe VIB soient, dans le catalyseur, sous forme d'oxydes, celui-ci est généralement soumis, avant son utilisation, à un traitement en atmosphère réductrice, par exemple sous flux d'hydrogène, à une température comprise entre la température ambiante et 500 °C, plus particulièrement entre la température ambiante et 250 °C.

La coupe d'essence à traiter peut présenter des teneurs en dioléfines élevées, correspondant par exemple à une MAV (abréviation de l'anglais « Maleic Anhydride Value »), déterminée selon la méthode UOP 326-82, comprise entre 20 et 100, et des teneurs en styrène allant par exemple jusqu'à 5 % en masse, sans que ces valeurs soient limitatives. Après hydrogénation, la teneur en dioléfines conduit à une MAV généralement inférieure à 8, de préférence inférieure à 4 et, de manière encore plus préférée, inférieure à 2. La concentration en styrène après hydrogénation est généralement inférieure à 1 % en masse et de préférence à 0.5 % en masse.

L'essence, selon son origine, peut contenir de 1 à 600 ppm de soufre sous forme de mercaptans. Le procédé utilisant le catalyseur de l'invention permet de transformer au moins 50 % des mercaptans présents en sulfures. Cette réaction se déroule lors du traitement visant à hydrogéner les dioléfines et/ou les composés styréniques.

Le traitement de la coupe d'essence dans le procédé d'hydrogénation sélective utilisant le catalyseur selon l'invention comprend la mise en contact de ladite coupe avec le catalyseur généralement sous pression et à une température comprise entre 10 °C et 200 °C, en présence d'une quantité d'hydrogène en faible excès par rapport à la valeur stoechiométrique qui permet l'hydrogénation des dioléfines et des composés styréniques. L'hydrogène et la charge sont injectés en courant ascendant ou descendant dans un réacteur, par exemple à lit fixe, dont la température est comprise entre 10 °C et 200 °C. La pression est généralement suffisante pour maintenir liquide à l'entrée du réacteur plus de 80 % en masse et de préférence plus de 95 % en masse de l'essence à traiter. La pression est généralement comprise entre 4 et 50 bar et plus avantageusement entre 10 et 50 bar. La vitesse spatiale horaire, ou VVH, (définie comme le rapport du débit volumique de charge au volume de catalyseur), établie dans ces conditions entre 1 et 20 h$^{-1}$ et de préférence entre 2 et 10 h$^{-1}$, et, de manière encore plus préférée, entre 3 et 10 h$^{-1}$.

Le catalyseur de l'invention peut aussi être utilisé dans des procédés utilisant des technologies différentes. Ainsi, par exemple, la réaction d'hydrogénation peut être réalisée dans un réacteur implanté dans une colonne de distillation ou dans un réacteur associé de manière externe à une colonne de distillation, comme décnt par exemple par le même déposant dans la demande de brevet français FR-A-2 752 236.

La description complète de toutes demandes, tous brevets et publications, cités ci-dessus et ci-dessous, et de la demande française correspondante 97/07 213, déposée le 9 juin 1997, est incluse par référence dans la présente descnption.

Les exemples qui suivent, non limitatifs, illustrent l'invention.

**Exemple 1 (comparatif).**

Un catalyseur comparatif A est préparé par imprégnation d'un support avec une solution de nitrate de palladium. Ce support se présente sous forme de billes de 2 à 4 mm de diamètre. Sa surface spécifique est de 30 m$^2$/g et son volume poreux de 0,8 ml/g. Après imprégnation, le catalyseur est séché à 120 °C et calciné à 450 °C. La teneur en palladium du catalyseur comparatif A est de 0,35 % en masse. Dans ce catalyseur, le palladium est réparti à la périphérie des billes.

**Exemple 2.**

Un catalyseur B est préparé à partir d'un support de surface spécifique 30 m$^2$/g et de volume poreux 0.8 ml/g. Le support est d'abord imprégné par une solution de métatungstate d'ammonium. Le support est ensuite séché à 120 °C et calciné à 450 °C. Puis une solution de nitrate de palladium est imprégnée sur ce support. Le catalyseur est enfin séché à 120 °C et calciné a 450 °C.

Le catalyseur B contient 0,35 % en masse de palladium et 1,5 % en masse de tungstène. Dans ce catalyseur, le palladium est réparti à la périphérie des billes.

**Exemple 3 (comparatif).**

Un catalyseur comparatif C est préparé par imprégnation d'un support avec une solution de nitrate de palladium. Ce support se présente sous forme de bille de 2 à 4 mm de diamètre. Sa surface spécifique est de 65 m$^2$/g et sont volume poreux de 0,6 ml/g. Après imprégnation, le catalyseur est séché à 120 °C et calciné à 450 °C.

La teneur en palladium du catalyseur comparatif C est de 0.3 % en masse. Dans ce catalyseur, le palladium est réparti à la périphérie des billes.

**Exemple 4.**

Un catalyseur D est préparé à partir du même support que celui utilisé dans l'exemple 3. Le support est d'abord imprégné par une solution d'heptamolybdate d'ammonium. Le support est ensuite séché à 120 °C et calciné à 450 °C. Puis une solution de nitrate de palladium est imprégnée sur ce support. Le catalyseur est enfin séché à 120 °C et calciné à 450 °C.

Le catalyseur D contient 0,3 % en masse de palladium et 1,0 % en masse de molybdène. Dans ce catalyseur, le palladium est réparti à la périphérie des billes.

**Exemple 5.**

Un catalyseur E est préparé à partir du même support que celui utilisé dans l'exemple 3. Le support est d'abord imprégné par une solution métatungstate d'ammonium. Le support est ensuite séché à 120 °C et calciné à 450 °C. Puis une solution de nitrate de palladium est imprégnée sur ce support. Le catalyseur est enfin séché à 120 °C et calciné à 450 °C.

Le catalyseur E contient 0,3 % en masse de palladium et 3,0 % en masse de tungstène. Dans ce catalyseur, le palladium est réparti à la périphérie des billes.

**Exemple 6.**

Les propriétés hydrogénantes des catalyseurs A et B sont évaluées en test discontinu dans un réacteur parfaitement agité. Pour chaque essai, 2 g de catalyseur sont réduits 2 heures à 150 °C sous courant d'hydrogène, puis transférés sous inerte dans le réacteur d'hydrogénation. La charge à hydrogéner est un mélange contenant 12 g de dioléfine dilué dans 180 cm$^3$ de n-heptane. La température du test est maintenue à 20 °C et la pression à 10 bar. Les résultats sont rassemblés dans le tableau 1. L'activité hydrogénante est exprimée en mol·min$^{-1}$·g$_{cata}$$^{-1}$.

Tableau 1

| Catalyseur | A | B |
|---|---|---|
| Activité (mol·min$^{-1}$·g$_{cata}$$^{-1}$) | 1,64 E-02 | 1,85 E-02 |
| Sélectivité % en butène-1 à 80 % de conversion du butadiène | 57 | 57 |

On remarque que l'activité du catalyseur B selon l'invention est 1,13 fois plus importante que celle du catalyseur comparatif A, le catalyseur B conservant une sélectivité en butène-1 élevée.

## Exemple 7.

Les propriétés hydrogénantes des catalyseurs A et B sont évaluées en réacteur isotherme à lit traversé.

Dans chaque essai, 20 cm$^3$ de catalyseur sont placés dans le réacteur d'hydrogénation et réduits pendant 4 heures à 150 °C sous une pression de 5 bar et un débit de 30 l/h d'hydrogène. Après réduction du catalyseur, la pression est portée à 30 bar et la température à 70 °C. La charge à hydrogéner est une charge modèle composée de 10 % en masse de styrène, 10 % en masse d'isoprène dans le n-heptane et 300 ppm de soufre sous forme de pentanethiol. La charge est injectée à une VVH de 3 h$^{-1}$ en présence d'hydrogène (rapport H$_2$/oléfines de 15). La durée du test est de 6 heures.

Des échantillons liquides sont prélevés et analysés par chromatographie en phase gazeuse.

De ces analyses, on détermine la conversion en styrène et en isoprène. La conversion est exprimée par le rapport :

$$[(\text{concentration }_{entrée} - \text{concentration }_{sortie})/(\text{concentration }_{entrée})].$$

Dans ces conditions, les résultats obtenus sont ceux présentés dans le tableau 2.

Tableau 2

| Catalyseur | Conversion du styrène (%) | Conversion de l'isoprène (%) |
|------------|---------------------------|------------------------------|
| A | 54 | 83 |
| B | 83 | 90 |

## Exemple 8.

Une seconde série de tests en réacteur isotherme à lit traversé a été réalisée avec les catalyseurs B et C sur une charge essence de vapocraquage dans les conditions suivantes :

Pour chaque essai, 12,5 cm$^3$ de catalyseur à base sont placés dans le réacteur d'hydrogénation et réduits pendant 2 heures à 150 °C sous une pression de 5 bar et un débit de 27 l/h d'hydrogène. Après réduction du catalyseur, la pression est portée à 30 bar et la température à 70°C. La charge à hydrogéner est une coupe essence de vapocraquage (point final à 200 °C, teneur en soufre : 50 ppm ; MAV ; 68 mg/g ; et teneur en styrène : 4 % en masse). La charge est injectée à une VVH de 8 h$^{-1}$ en présence d'hydrogène (débit d'hydrogène de 16.5 l/h). Les résultats présentés dans le tableau 3 donnent les constantes de vitesses relatives pour l'hydrogénation du styrène et des dioléfines ainsi que les valeurs des MAV après 200 heures de fonctionnement.

Les constantes de vitesse sont déterminées en assimilant les réactions d'hydrogénation à des réactions d'ordre 1. Elles sont donc proportionnelles au logarithme du rapport entre les concentrations du produit considéré à l'entrée et à la sortie du lit de catalyseur.

Tableau 3

| Catalyseur | Constante de vitesse relative d'hydrogénation du styrène (h$^{-1}$) | Constante de vitesse relative d'hydrogénation des dioléfines (h$^{-1}$) | MAV entrée mg/g | MAV sortie mg/g |
|------------|------------|------------|------------|------------|
| A | 0,14 | 0,40 | 68 | 22,0 |
| B | 0,25 | 0,64 | 68 | 15,8 |

On remarque que le catalyseur B, qui contient 1,5 % en masse de tungstène, est 1,8 fois plus actif pour l'hydrogénation du styrène et 1,6 fois plus actif pour l'hydrogénation des dioléfines que le catalyseur comparatif A.

## Exemple 9.

Les propriétés hydrogénantes et adoucissantes des catalyseurs C, D et E sont évaluées en réacteur isotherme à lit traversé.

Pour chaque essai, 20 g de catalyseur sont placés dans le réacteur d'hydrogénation et réduits pendant 2 heures à 150 °C sous une pression de 30 bar et un débit de 50 l/h d'hydrogène. Après réduction du catalyseur, la pression est portée à 35 bar et la température à 100 °C. La charge à hydrogéner est une charge modèle composée de 10,3 % en masse de styrène, 10,3 % en masse d'isoprène et 522 ppm de soufre sous forme d'éthanethiol dans le toluène. La charge est injectée à une VVH de 1,4 h$^{-1}$ en présence d'hydrogène (rapport H$_2$/oléfines de 3,4).

Des échantillons liquides sont prélevés et analysés par chromatographie en phase gazeuse. A partir des résultats des analyses effectuées, on détermine la conversion du styrène et de l'isoprène.

L'analyse de la teneur en soufre de l'effluent après hydrogénation et la teneur en mercaptan de la coupe de départ permet de déterminer la conversion des mercaptans.

Les conversions sont exprimées par le rapport :

$$[(\text{concentration }_{entrée} - \text{concentration }_{sortie})/(\text{concentration }_{entrée})].$$

Dans ces conditions, les résultats obtenus après stabilisation (200 heures de fonctionnement) sont ceux présentés dans le tableau 4.

Tableau 4

| Catalyseur | Conversion du styrène (%) | Conversion de l'isoprène (%) | Conversion des mercaptans (%) |
|---|---|---|---|
| C | 98,0 | 98,8 | 59 |
| D | 98,8 | 99,4 | 72 |
| E | 99.6 | 99.8 | 80 |

A forte conversion, les catalyseurs D et E présentent de meilleures performances que le catalyseur comparatif C, tant pour l'hydrogénation du styrène et de l'isoprène que pour la conversion des mercaptans.

## Exemple 10.

Une seconde série de tests a été réalisée avec les catalyseurs C, D et E dans les conditions suivantes :

Pour chaque essai, 20 g de catalyseur sont placés dans le réacteur d'hydrogénation et réduits pendant 2 heures à 150 °C sous une pression de 30 bar et un débit de 50 l/h d'hydrogène. Après réduction du catalyseur, la pression est portée à 30 bar et la température à 90°C. La charge à hydrogéner est une charge modèle composée de 10 % en masse de styrène, 10 % en masse d'isoprène et 250 ppm de soufre sous forme de pentanethiol dans le n-heptane. La charge est injectée à une VVH de 3 h$^{-1}$ en présence d'hydrogène (rapport H$_2$/oléfines de 3,4). Les résultats présentés dans le tableau 5 donnent les conversions de l'isoprène du styrène et des mercaptans après 200 heures de fonctionnement.

Tableau 5

| Catalyseur | Conversion du styrène (%) | Conversion de l'isoprène (%) | Conversion des mercaptans (%) |
|---|---|---|---|
| C | 47 | 58 | 56 |
| D | 70 | 82 | 78 |
| E | 83 | 90 | 90 |

A plus faible conversion, le gain apporté par l'ajout de molybdène ou de tungstène pour l'hydrogénation des composés insaturés (styrène et isoprène) et pour l'élimination des mercaptans est encore plus marqué que dans l'exemple 9 ci-dessus.

Les exemples qui précèdent peuvent être répétés avec des résultats analogues en substituant les réactifs et/ou les conditions générales ou particulières décrites dans l'invention à ceux mis en oeuvre dans ces exemples.

Au vu de la description qui précède, l'homme du métier peut aisément déterminer les caractéristiques essentielles de l'invention et, sans s'écarter de l'esprit et de la portée de celle-ci, y apporter divers changements ou modifications pour l'adapter à diverses utilisations et conditions de mise en oeuvre.

**Revendications**

1. Catalyseur d'hydrogénation sélective, caractérisé en ce qu'il comprend un support particulier comprenant des grains d'au moins un oxyde réfractaire sur lequel sont déposés du palladium, réparti à la périphérie des grains dudit support, et au moins un métal choisi parmi le molybdène et le tungstène sous la forme d'au moins un oxyde.

2. Catalyseur selon la revendication 1, caractérisé en ce que les grains de support sont sous la forme de billes ou de cylindres et le palladium est réparti dans une couche périphérique desdits grains avec une pénétration à une profondeur ne dépassant pas 80 % du rayon desdites billes ou desdits cylindres.

3. Catalyseur selon la revendication 1 ou 2, caractérisé en ce que sa teneur en palladium est comprise entre 0,2 et 5 % en masse et sa teneur en molybdène et/ou tungstène entre 0,5 et 5 % en masse.

4. Catalyseur selon l'une des revendications 1 à 3, caractérisé en ce que ledit support est choisi parmi les alumines, les silices, les silices-alumines, la magnésie et leurs mélanges.

5. Catalyseur selon la revendication 4, caractérisé en ce que ledit support est une alumine de surface spécifique comprise entre 5 et 200 $m^2$/g et de volume poreux de 0,4 à 1 $cm^3$/g.

6. Catalyseur selon la revendication 5, caractérisé en ce que ledit support est une alumine de surface spécifique de 10 à 110 $m^2$/g.

7. Procédé de préparation d'un catalyseur selon l'une des revendications 1 à 6, caractérisé en ce que le palladium est introduit par imprégnation du support au moyen d'une solution aqueuse ou organique d'un précurseur de palladium choisi parmi les composés minéraux et les composés organométalliques, en ce que le tungstène est introduit par imprégnation du support par une solution aqueuse ou organique d'un précurseur du tungstène et en ce que le molybdène est introduit par imprégnation du support par une solution aqueuse ou organique d'un précurseur du molybdène.

8. Procédé de préparation selon la revendication 7, caractérisé en ce que le précurseur de palladium est choisi parmi le chlorure de palladium, le nitrate de palladium, le palladium bis π-allyle et le palladium bis-acétylacétonate, le précurseur du tungstène est choisi parmi le métatungstate d'ammonium, le paratungstate d'ammonium, le chlorure de tungstène et les composés carbonylés du tungstène et le précurseur du molybdène est l'heptamolybdate d'ammonium.

9. Procédé de préparation selon l'une des revendications 7 et 8, caractérisé en ce que le palladium d'une part et le métal choisi parmi le tungstène et le molybdène d'autre part sont introduits à l'aide d'une solution commune.

10. Procédé de préparation selon l'une des revendications 7 et 8, caractérisé en ce que le palladium d'une part et le métal choisi parmi le tungstène et le molybdène d'autre part sont introduits à l'aide de solutions séparées.

11. Procédé de préparation selon la revendication 10, caractérisé en ce que le composé renfermant le métal choisi parmi le tungstène et le molybdène est introduit avant le composé renfermant le palladium.

12. Procédé de préparation selon l'une des revendications 7 à 11, caractérisé en ce que, après introduction des différents éléments, le catalyseur est séché à environ 120 °C, puis calciné à une température de 150 à 700 °C.

13. Procédé de préparation selon l'une des revendications 7 à 12, caractérisé en ce que, lorsque les métaux sont introduits par au moins deux étapes d'imprégnation, entre deux étapes d'imprégnation successives, le catalyseur est soumis à un séchage à une température de 90 à 150 °C et à une calcination sous air à une température de 400 à 500 °C.

14. Procédé de préparation selon l'une des revendications 7 à 13, caractérisé en ce que le catalyseur est soumis, avant son utilisation, à un traitement en atmosphère réductrice, à une température comprise entre la température ambiante et 500 °C.

15. Procédé de préparation selon la revendication 14, caractérisé en ce que la température est comprise entre la température ambiante et 250 °C.

<table>
<tr><td colspan="2">**Office européen<br>des brevets**</td><td>**RAPPORT DE RECHERCHE EUROPEENNE**</td><td>Numéro de la demande<br><br>EP 98 40 1226</td></tr>
</table>

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US 3 422 002 A (KOVACH STEPHEN M ET AL)<br>14 janvier 1969<br>* le document en entier *<br>--- | 1-15 | B01J23/652<br>C10G45/40 |
| A | DE 27 36 955 A (EXXON RESEARCH ENGINEERING CO) 2 mars 1978<br>* le document en entier *<br>--- | 1-15 | |
| A | US 3 801 516 A (MIQUEL J ET AL)<br>2 avril 1974<br>* le document en entier *<br>--- | 1-15 | |
| A | US 4 472 529 A (JOHNSON RUSSELL W ET AL)<br>18 septembre 1984<br>* le document en entier *<br>--- | 1-15 | |
| A | EP 0 653 242 A (SHELL INT RESEARCH)<br>17 mai 1995<br>* le document en entier *<br>--- | 1-15 | |
| D,A | US 3 691 066 A (CARRUTHERS JOHN ET AL)<br>12 septembre 1972<br>--- | | DOMAINES TECHNIQUES RECHERCHES (Int.Cl.6)<br><br>B01J<br>C10G |
| A | EP 0 685 552 A (INST FRANCAIS DU PETROL)<br>6 décembre 1995<br>--- | | |
| A | GB 954 203 A (CHEMETRON CORPORATION)<br>----- | | |

Le présent rapport a été établi pour toutes les revendications

| Lieu de la recherche | Date d'achèvement de la recherche | Examinateur |
|---|---|---|
| LA HAYE | 9 septembre 1998 | Michiels, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P04C02)